# EUROPEAN PATENT SPECIFICATION

(11) **EP 3 741 241 B1**
(45) Date of publication and mention of the grant of the patent: **07.06.2023**
(21) Application number: 20182658.3
(22) Date of filing: 26.06.2020
(51) Int. Cl.: A41D 13/11, G02C 11/08

(54) **IMPROVEMENT TO FACEMASKS**
VERBESSERUNG VON GESICHTSMASKEN
AMÉLIORATION DES MASQUES FACIAUX

(43) Date of publication of application: 25.11.2020
(73) Proprietor: Co.view GmbH, 70329 Stuttgart (DE)
(72) Inventor: Venrath, Jule Lucia, 70188 Stuttgart (DE); Venrath, Lucas Johannes Alois, 71332 Waiblingen (DE); Grüninger, Jens, 70329 Stuttgart (DE)
(74) Representative: Meyer zu Bexten, Elmar

(56) References cited:
- JP-A- 2013 188 281
- KR-A- 20130 134 596
- KR-A- 20190 125 751
- US-A- 3 974 829
- US-A1- 2002 029 408

## Description

### Technical Field

The invention relates to the product as per the first portion of the independent claim.

### Background Art

The state of the art comprises numerous protective facemasks, such as for surgical use or preventing the transmission and contraction of communicable diseases. Such facemask is worn so that mouth and nose are covered, exhaled air escaping multilaterally. If a pair of glasses is worn above the mask, part of this escaping air exits the mask underneath the lenses, causing the spectacles to fog up.

In view of this annoyance, PTL1 discloses a mask reinforced by a wire coextensive with its upper edge that forms a seal whereby the breath of the mask wearer cannot pass upwardly into the wearer's eyes or around glasses on the wearer's nose where it may becloud his or her glasses. The wire is formed of a readily bendable metal so that the nose bridge portion may be bent to fit noses of different shapes.

PTL2 (which discloses the preamble of claim 1) and PTL3 each disclose a brace suitable for clipping onto an upper edge of a facemask and a pad joined to the brace for sealing the edge against a facial area.

To avoid such instrumentation, specialized techniques of tying a conventional facemask have been devised to prevent fogging of its user's eyewear. NPL1 outlines an approach of this kind. Finally, as a generic remedy against misting lenses, chemical agents are available for topical application. However, these liquids usually involve the use of a cleaning cloth.

### Summary of invention

A two-part clip-on system for face masks, particularly hygiene masks, comprises two fixtures comprising braces, made of flexible synthetics, which are provided with metallic inserts for mouldability. These braces are fitted with a surface composed of soft, ductile, and supple polymers to facilitate a perfect fit to the wearer's face while preventing air from escaping above the mask to protect spectacle wearers from condensation.

### Technical Problem

The invention aims to provide a utensil which, while being simple to handle and long-lasting, prevents eyewear from fogging when used with a mask.

### Solution to Problem

The problem is solved as per the second portion of Claim 1.

### Advantageous effect of invention

An embodiment of the invention allows spectacle wearers to use a face mask under varying temperature conditions without risk of the lenses fogging up. Thus, clarity of vision and the protection afforded by a mask can be maintained in equal measure. Easy handling is ensured by the precise and user-friendly fitting of the braces along the facemask's upper edge. At the same time, a soft and smooth polymer, which extends from the upper nostrils to the sides of the mask, protects the skin and keeps moisture at bay. The braces are lightweight and adaptable to all facial contours. Moreover, to safeguard hygienic standards, the braces are washable and disinfectable, thus being universally applicable for personal as well as professional use such as by lab technicians and in industrial sectors where respiratory protection is mandatory.

### Brief description of drawings

Figure 1 is a perspective view of a brace.
Figure 2 is a front view of a facemask with two braces attached.
Figure 3 is a front view of the facemask in used condition.
Figure 4 is an exploded view of the brace of Figure 1.

### Description of embodiments

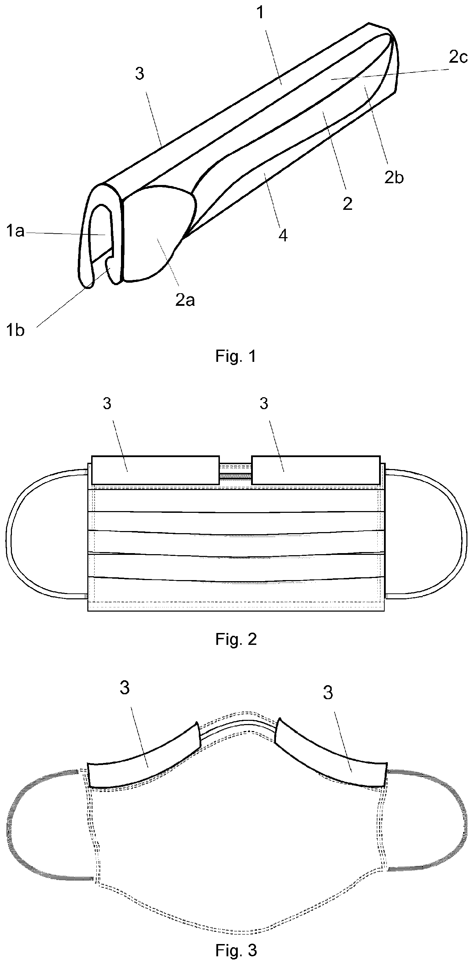

Braces for use on facemasks to prevent fogging of spectacles can be manufactured from various materials, preferably from flexible and lightweight plastics as well as soft, smooth, non-irritating, and treatable polymers for maximum comfort. Figure 1 shows an example of a brace (1) to be worn on the right-hand side of the face.

Figure 2 illustrates a symmetrical arrangement of two such braces (1) on a facemask such that when the mask is donned, the braces (1) would extend outwardly from the left and right sides of the wearer's nasal bridge. In the configuration depicted, the interior (1a - Figure 1) of each brace (1) encompasses the upper edge of the facemask. To facilitate an adequate fixation of the braces (1), matching lips or bulges (1b - Figure 1) are provided along the lower edge of the interior (1a).

As may be gathered from Figure 3, the soft polymer that in the present embodiment constitutes the brace's body can be adapted to the shape of the wearer's face by means of a ductile insert (3), for instance, in the form of a wire, rail, or metallic mesh of high plasticity.

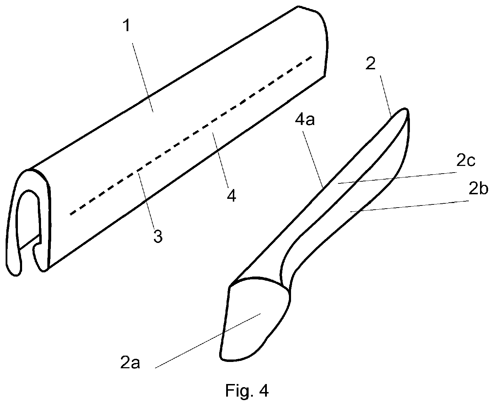

Directing attention to Figure 4, the brace's flat inner surface (4) is bonded to the corresponding surface (4a) of a pad (2), which forms the area of contact between the brace (1) and the skin of its user. For this purpose, the pad (2) exhibits an ergonomic shape: With its thickness increasing towards the center of the wearer's face, the pad's corresponding contact surface (2a) nestles comfortably against the nose when the mask is donned. Away from this first contact surface (2a), the pad (2) flattens out towards the outer edge of the facemask along an elongate second surface (2b) designed to rest on the wearer's cheeks. This anatomically adapted basic shape of the pad (2), due to the nature of the latter's material, yields individually to the facial contours of the facemask's user.

The upper rim (2c) of the pad (2) matches the outline of its contact surfaces (2a, 2b) while being sufficiently filigree to prevent the facemask from touching the spectacle frame or lenses and providing a light wearing comfort.

It is again noted that no accessories are required for attaching the brace (1) to the facemask or detaching it therefrom.

The overall length of the edges of the brace (1) is based on that of a conventional facemask.

The yielding material of the pad (2) provides for a variable shape that seals the upper edge of a facemask against the eyeglass lenses.

### Industrial applicability

The invention is applicable, inter alia, throughout the apparel and medical equipment industries.

### Reference signs list

- 1: Brace
- 1a: Interior
- 1b: Lips or bulges
- 2: Pad
- 2a: First contact surface
- 2b: Second contact surface
- 2c: Upper rim
- 3: Insert
- 4: First bonding surface
- 4a: Second bonding surface

### Citation list

The following documents are cited hereinbefore.

### Patent literature

PTL1: US 2012505 A (GOLDSMITH SAMUEL J) 27.08.1935
PTL2: JP 2013188281 A (KAMIYAMA MITSUAKI) 26.09.2013
PTL3: US 2002029408 A (LINDAHL ARTHUR CHARLES [US]) 14.03.2002

### Non-patent literature

NPL1: JORDAN, Daniel J., et al. Tying a surgical mask to prevent fogging. The Annals of The Royal College of Surgeons of England. 2014, vol.96, no.2, p.165.

## Claims

1. Facemask such as a fabric or surgical mask,
having a number of fixtures, each including a brace (1) for clipping onto an upper edge of the facemask and a pad (2) joined to the brace (1) for sealing the edge against a facial area such as a cheek,
**characterized in that**
the number of fixtures is two and the pad (2) has a narrow upper rim (2c).

2. Facemask as per Claim 1 wherein
the brace (1) has an interior (1a) having lips or bulges (1b) for clamping the brace (1) upon the facemask.

3. Facemask as per Claim 1 or Claim 2 wherein
the brace (1) has a preferably flat first bonding surface (4) and
the pad (2) has a second bonding surface (4a) bonded to the first bonding surface (4).

4. Facemask as per Claim 3 wherein,
opposite the first bonding surface (4), the brace (1) has a convex front face.

5. Facemask as per any of the preceding claims wherein
the brace (1) is predominantly synthetic.

6. Facemask as per Claim 5 wherein
the brace (1) has a preferably ductile metallic insert (3).

7. Facemask as per Claim 6 wherein
the insert (3) takes the form of a wire, rail, or mesh.

8. Facemask as per any of the preceding claims wherein
the pad (2) is polymeric.

9. Facemask as per any of the preceding claims wherein
the braces are arranged symmetrically alongside the upper edge of the facemask.

## Patentansprüche

1. Gesichtsmaske wie eine Stoff- oder chirurgische Maske mit
einer Anzahl von Vorrichtungen, jeweils umfassend eine Verstärkung (1) zum Befestigen an einem oberen Rand der Gesichtsmaske und
einer mit der Verstärkung (1) verbundenen Unterlage (2) zum Abdichten des Randes gegen einen Gesichtsbereich, z. B. eine Wange,
**dadurch gekennzeichnet, dass**
die Anzahl der Vorrichtungen zwei ist und
die Unterlage (2) einen schmalen oberen Rand (2c) hat.

2. Gesichtsmaske nach Anspruch 1, wobei
die Verstärkung (1) eine Innenseite (1a) mit Lippen oder Wölbungen (1b) zum Anbringen der Verstärkung (1) an der Gesichtsmaske aufweist.

3. Gesichtsmaske nach Anspruch 1 oder Anspruch 2, wobei
die Verstärkung (1) eine vorzugsweise ebene erste Klebefläche (4) aufweist und
die Unterlage (2) eine zweite Klebefläche (4a) aufweist, die mit der ersten Klebefläche (4) verbunden ist.

4. Gesichtsmaske nach Anspruch 3, wobei
die Verstärkung (1) gegenüber der ersten Klebefläche (4) eine konvexe Stirnfläche aufweist.

5. Gesichtsmaske nach einem der vorstehenden Ansprüche, wobei die Verstärkung (1) vorwiegend aus Kunststoff besteht.

6. Gesichtsmaske nach Anspruch 5, wobei
die Verstärkung (1) einen vorzugsweise biegsamen metallischen Einsatz (3) aufweist.

7. Gesichtsmaske nach Anspruch 6, wobei
der Einsatz (3) die Gestalt eines Drahtes, einer Schiene oder eines Gitters hat.

8. Gesichtsmaske nach einem der vorstehenden Ansprüche, wobei die Unterlage (2) polymer ist.

9. Gesichtsmaske nach einem der vorstehenden Ansprüche, wobei die Vorrichtungen symmetrisch entlang des oberen Randes der Gesichtsmaske angeordnet sind.

## Revendications

1. Masque facial tel qu'un masque en tissu ou un masque chirurgical
avec
un certain nombre de dispositifs, chacun comprenant un renfort (1) destiné à être fixé à un bord supérieur du masque facial et
un support (2) relié au renfort (1) pour assurer l'étanchéité du bord contre une zone du visage, par exemple une joue,
**caractérisé en ce que**
le nombre de dispositifs est de deux et
le support (2) a un bord supérieur étroit (2c).

2. Masque facial selon la revendication 1, dans lequel
le renfort (1) présente une face interne (1a) avec des lèvres ou des bombages (1b) pour attacher le renfort (1) au masque facial.

3. Masque facial selon la revendication 1 ou la revendication 2, dans lequel
le renfort (1) présente une première surface adhésive (4), de préférence plane, et
le support (2) présente une deuxième surface adhésive (4a) reliée à la première surface adhésive (4).

4. Masque facial selon la revendication 3, dans lequel
le renfort (1) présente une surface frontale convexe vis-à-vis de la première surface adhésive (4).

5. Masque facial selon l'une quelconque des revendications précédentes, dans lequel
le renfort (1) est principalement constitué de matière plastique.

6. Masque facial selon la revendication 5, dans lequel
le renfort (1) comporte un insert métallique (3), de préférence souple.

7. Masque facial selon la revendication 6, dans lequel
l'insert (3) a la forme d'un fil, d'un rail ou d'une grille.

8. Masque facial selon l'une quelconque des revendications précédentes, dans lequel
le support (2) est polymère.

9. Masque facial selon l'une quelconque des revendications précédentes, dans lequel
les dispositifs sont disposés symétriquement le long du bord supérieur du masque facial.
